# EUROPEAN PATENT APPLICATION

(11) **EP 2 402 838 A1**
(43) Date of publication of application: **04.01.2012**
(21) Application number: 10006899.8
(22) Date of filing: 03.07.2010
(51) Int. Cl.: G06F 3/01

(54) **Methods and device for the determination and/or feedback and/or control of the effective measurement space in motion capturing systems**

(71) Applicant: Fachhochschule Dortmund, 44139 Dortmund (DE); Leibniz-Institut für Arbeitsforschung an der TU Dortmund, 44139 Dortmund (DE)
(72) Inventor: Gude, Dietmar, 44319 Dortmund (DE); Stark, Michael, 44227 Dortmund (DE); Lüken, Daniel, 49808 Lingen (DE)
(74) Representative: Schneider, Uwe

(57) **Abstract**

The invention relates to a method for the determination and/or feedback and/or control of the effective measurement space in motion capturing systems, in which at least one person or object is performing movements under control of at least one sensor. Such a method is developed further in such a manner that in a first step a model of the size and/or the geometry of the valid measurement space of the motion capturing system is determined under the current environmental conditions, where after the model of the determined valid measurement space is either fed into an application program in which the environmental data and the data of the movement of the person or object are processed, and which application program shows the determined valid measurement space to the person or object, or shown directly to the moving person or object, so that the moving person or object can take action to control its movements within the valid measurement space accordingly. In another embodiment after determining the model of the valid measurement space of the motion capturing system the model is permanently compared with the actual data of the movements of the person or object, so that actions can be performed with which a malfunction of an application program is prevented in which the environmental data and the data of the movement of the person or object are processed.

## Description

The invention relates to methods for the determination and/or feedback and/or control of the effective measurement space in motion capturing systems according to the preamble of claim 1 and to a respective device according to the preamble of claim 16.

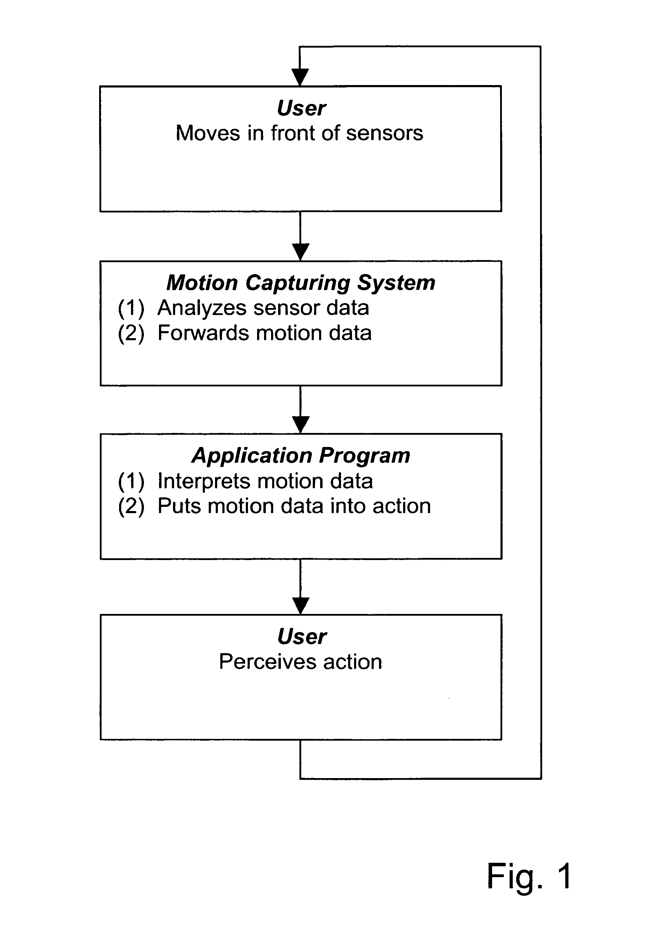

The invention belongs to the field of systems for the determination of (in general: human) body postures and body movements, e.g. for virtual and augmented reality, computer games or the film industry. This technology, called motion capturing, is outlined in Figure 1 regarding the principle processes known in the state of the art. It is used to record movements e.g. of a person acting in front of special sensors and to transform these movements in a computer-readable format. This information is then used in real time or subsequently by application programs to control the course of events.

In the review [1] by Welch and Foxlin, different technical realizations of such motion capturing systems and their fields of application are presented. In optical systems, cameras record active or passive markers attached to the subjects or objects to be tracked.. An example for non-optical devices are electromagnetic systems, in which electromagnetic sensors determine the position of the subjects or objects and their orientation in an electromagnetic field and forward this information to the computer. The typical fields of application include, e.g.,
virtual reality (VR) and augmented reality (AR), e.g. the capturing of head movements for the adjustment of the visual perspective in head-mounted displays,
innovative interactive computer games, e.g. the Wii controller for an intuitive interaction via gestures,
the film industry, e.g. using movement data for the animation of virtual characters.

Applications based on motion capturing systems comprise the problem that the measurement space of the sensor system is limited and generally smaller than the possible movement space of the user. Due to this, it frequently happens that the user exceeds the measurement space without being aware of this fact. Exceeding the measurement space, the movement data become unusable for the computer system. Under the most positive conditions, e.g. in a movie production, this is noticed early enough and the recording of the respective movements is retried. In real-time systems (e.g., VR applications or computer games) exceeding the measurement space leads inevitably to a malfunction of the program, in such a way that the movement and derived actions displayed on the screen do not correspond to the real movement. This is an important cause for the appearance of simulator sickness (also known as cyber sickness).

The problem to be solved by the invention is therefore to provide a method and a respective system, with which the exceeding of the measurement space is detected early enough to generate adequate feedback and/or control signals for the elements of the motion capturing scenario (user, motion capturing system, application program and environment), thereby reducing or avoiding the adverse effects of exceeding the measurement space.

The solution of the problem according to the methods of the invention arises from the characterising parts of claim 1 and according to the device from the characterising part of the claim 16 in connection with the features of the respective generic terms. Further advantageous embodiments of the invention can be seen from the subclaims.

The invention shows a method for the determination and/or feedback and/or control of the effective measurement space in motion capturing systems, in which at least one person or object is performing movements under control of at least one sensor. Such a method starts with a first step in which a model is determined of the size and/or the geometry of the valid measurement space of the motion capturing system under the current environmental conditions, where after the model of the determined valid measurement space and/or derived measurements, which are derived by comparing the model with the actual data of the movements of the person or object, are used as feedback for or to control either the environmental conditions and/or the motion capturing system and/or the moving person or object so that actions can be performed with which a malfunction of an application program is prevented in which the environmental data and the data of the movement of the person or object are processed. The method uses several feedback and control methods to use the data of the model of the determined valid measurement space and/or derived measurements to perform actions with which a malfunction of an application program can be prevented in which the environmental data and the data of the movement of the person or object are processed. So it is possible to make changes to the environment, for example to move the sensors of the motion capturing system in the environment or to make changes to components of the environment, to make changes to the motion capturing system, for example to change characteristics of the sensors of the motion capturing system and/or to influence the moving of the person or object. So a lot of different influences can be taken into account to influence the correct function of the application program by ensuring that the person or object always acts in the boundaries of the valid measurement space of the motion capturing system.

A first preferred embodiment shows a method in which during a first step a model of the size and/or the geometry of the valid measurement space of the motion capturing system is determined under the current environmental conditions, where after the model of the determined valid measurement space is either fed into an application program in which the environmental data and the data of the movement of the person or object are processed, and which application program shows the determined valid measurement space to the person or object, or shown directly to the moving person or object, so that the moving person or object can take action to control its movements within the valid measurement space accordingly.

Another preferred embodiment shows a method in which during a first step a model of the size and/or the geometry of the valid measurement space of the motion capturing system is determined under the current environmental conditions, where after the model of the determined valid measurement space is permanently compared with the actual data of the movements of the person or object, so that actions can be performed with which a malfunction of an application program is prevented in which the environmental data and the data of the movement of the person or object are processed.

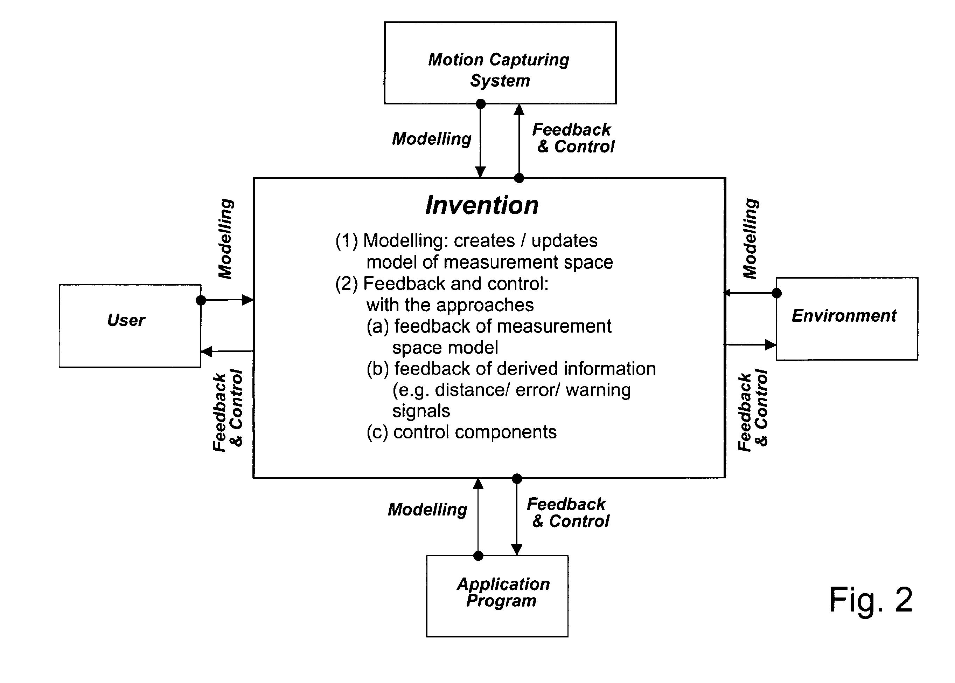

The basic principle underlying the invention is presented in Figure 2.

In the initial stage of modelling the boundaries of the effective measurement space of the motion capturing system, the characteristics of the elements of the motion capturing scenario are analyzed, resulting in a formal description of the valid measurement space. One possible way to represent this measurement space is a 3D model in the form of a convex hull. This model can then be used in the feedback and control stage to prevent exceeding the boundaries of the valid measurement space and thereby avoiding the malfunction of the motion capturing system or the application. Several ways for realising such a feedback and control stage are discussed later.

In the initial stage, the primary input comes from the motion capturing system, as its technical characteristics are the most important constraints of the measurement space. Manufacturers of motion capturing systems currently just provide general information about the geometry of the measurement space in their manuals, e.g., describing it as a sphere or pyramid. In reality, however, the measurement space generally depends on the current conditions of the application. Electromagnetic systems, e.g., are heavily affected by metal objects in their environment, optical systems by occluding subjects and objects. Consequently, it is necessary to determine the model of the measurement space under the current conditions, taking into account the user, the application, and the environment in general.

However, the modelling can be realized as an automatic process, as the primary data source is the motion capturing system, the effects of the other elements are represented in this information. Depending on the technical features of the system, modelling can be based on different data sources and characteristics. In some systems, like the optical NDI Optotrak, error codes are fed back, which can be used for a corresponding modelling of the measurement space. In other systems, like the electromagnetic Ascension Flock of Birds, this is not the case. Here, approaching the limits of the measurement space e.g. result in a drastic fluctuation of the measurement values, which can be used for the modelling of the measurement space.

The modelling can be a one-time procedure, if the recording conditions will be held constant subsequently (e.g. in a scientific motion capturing laboratory). However, generally one has to assume that the recording conditions will not be constant (e.g. in computer games), necessitating a continuous review and revision of the geometric model of the measurement space in real-time.

The model developed in the above mentioned way is used to prevent a malfunction of the motion capturing-related elements of an application program, by giving a feedback to the system or by controlling one or more elements of the system. The term feedback is used in this context as indirect control, the term control as direct control. With respect to the feedback and control stage, three approaches are differentiated (for more details see also Figure 2).

First, the model itself can be fed back. The primary addressees in this case are the application program and the moving person or object. E.g., the geometry data of the boundaries possibly in the form of a convex hull can be forwarded to the application program, which can display this as a transparent geometry around the moving person or object (for example in an AR context) or the virtual equivalent (avatar) of the moving person or object on a screen. In parallel, feedback can also be given directly to the moving person or object. This is useful, for example, if the application program does not have an interface for processing the information provided by the process.

The second possible approach is the feedback of derived information, e.g. the distance of the moving person or object from the boundaries of the measurement space can be provided. The application program can react automatically to an approach of the boundaries, e.g. by rejecting the motion data, to avoid malfunctions. Again, as an alternative a direct feedback to the moving person or object is possible, which can be provided in different modalities, e.g., acoustic, visual or by vibration. The nature of such a feedback for the moving person or object is then that of an implicit or explicit warning, the moving person or object has to adapt the behaviour to it.

The third approach of the method is that the method directly controls and adapts elements of the system, with the main addressees being the motion capturing device and the environment. E.g., the method can initiate movements of the motion capturing equipment to recover adequate recording conditions. Another option is to modify and adapt technical parameters, e.g. the focal distance in camera-based motion capturing systems. Similarly, other objects in the environment can be controlled, e.g. thereby resolving occlusions or adjusting other relevant environmental parameters (e.g., optimizing illumination).

From the perspective of maximizing the compatibility of the feedback with the motion of the moving person or object in space, one should prefer a visual feedback from a first person view. E.g., in a head-mounted display with recording of the head movements by an electromagnetic tracking system, the current measurement space can be projected as an envelope around the user. This allows the moving person or object to estimate, in which regions the moving person or object has to expect a malfunction of the application program. Beside such a realization in the field of virtual reality VR, there are scenarios referring the principles of augmented reality AR. An example is the production of motion pictures, in which the moving person or object for the proper performance of the movements also needs a view on the environment. In this case, the application of a head-mounted display with see-through option would be adequate. Then, the projected measurement space would be integrated in the view of the real environment. In such complex applications with generally a large number of markers on the moving person or object one can also provide feedback how many of them already exceeded the measurement space. And finally, a stereoscopic projection allows the moving person or object to estimate how far the moving person or object is from the boundaries of the measurement space, enabling the moving person or object to adjust the movements to these boundaries.

An alternative visual feedback from the third person view reduces the technical complexity, but results in compromises with respect to the compatibility of the feedback of the information. For example, the measurement space can be presented as a transparent geometry around an avatar of the moving person or object on a conventional display. Such a solution would be suitable, e.g., for the Nintendo Wii, to visualize the boundaries of the measurement space without the introduction of additional hardware.

A technically much simpler but also ergonomically limited solution is an acoustic feedback, e.g. an audio warning, with increasing intensity or modulated pitch while one approaches the boundaries of the measurement space. In case of several markers on the moving person or object such a feedback would not provide information about which one is approaching the boundaries, and thus the movement cannot be corrected in a purposeful way. Another option is the use of feedback by vibration. E.g., each marker can be combined by a vibrating element, that indicates the approach of the boundaries of the measurement space similar to an audio warning. Compared to the acoustic feedback, this provides two advantages, the feedback is spatially differentiated and less distractive for the moving person or object. Thus, the application of an audio warning is only reasonable if a corresponding feedback is provided rather sporadically.

The invention was substantiated by different feasibility studies, for applications in the fields of VR and AR. Current activities are concerned with a real-time system, in which the head-mounted display Kaiser ProView XL 50 and the electromagnetic system Ascension Flock of Birds for the tracking of the head-movements are used. In an AR application, which is targeted to the requirements of scientific movement studies and the conditions of motion picture production, the optical motion capturing system NDI Optotrak together with the head-mounted display Sony LDI-D100BE with a see-through option were applied, see Lüken [2].

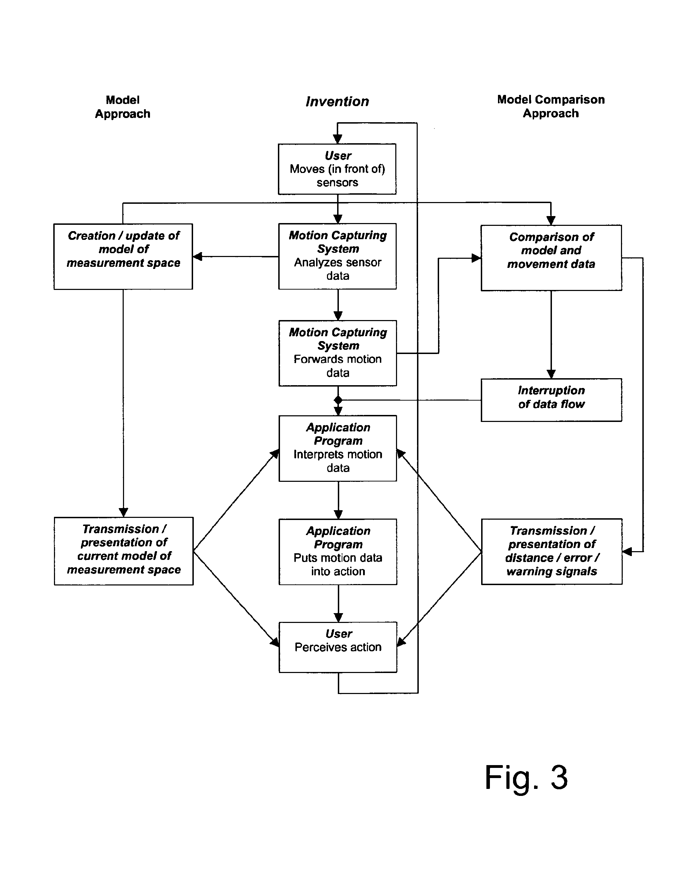

Another view to the various dependencies of the methods can be seen in Figure 3 in which some feedback functions of the method are schematically shown.

In the first stage a modelling process takes place in which the boundaries of the valid measurement space of the motion capturing system are evaluated, e.g. by means of an error signal of the motion capturing system itself. After determining the model it is possible to feed the results back either to the application program or to the moving person or object directly. If the results are fed directly to the moving person or object the moving person or object can react with changing the movements and therefore prevent to exceed the boundaries. The signals for noticing this exceeding can be given to the moving person or object by means of visual, acoustic or vibrating signals.

If the results are fed to the application it can modify the interpretation of the movement data or it can inform the moving person or object, e.g. by showing the valid measurement space on a display or the like. So the moving person or object can again change the movements and therefore prevent to exceed the boundaries.

An alternative or supplementary approach is to compare the model and movement data and to derive additional signals. In case of exceeding the measurement boundaries, this could initiate the interruption of the movement data flow. Other derived signals, e.g. calculated distances or the like, can be fed back to the moving person or object as well as the application program, as an explicit feedback that the measurement boundaries have been crossed.

So a lot of different actions and data can be used for protecting the moving person or object against exceeding the boundaries of the valid measurement space or to notice if such an excess has taken place and to react in an appropriate way.

### List of figures:

- Figure 1: - Outline of the basic elements of an application based on a motion capturing system according to the state of the art,
- Figure 2: - Basic principle of the method according to the invention - synthesis of the characteristics of the different elements of the motion capturing scenario in a model of the measurement space and feedback and/or control of the elements by providing information about the model or derived parameters as well as controlling the elements directly,
- Figure 3: - presented in a flowchart format, selected examples of the methods according to the invention for the feedback to the application and/or the moving person or object for the prevention of malfunctions of the motion capturing system.

### Literature:

[1] Welch, Greg & Foxlin, Eric: Motion Tracking: No Silver Bullet, But a Respectable Arsenal; IEEE Computer Graphics and Applications 22, 2002, page 24-38
[2] Lüken, Daniel: Augmented Reality - Darstellung des Messraums eines optischen Motion Trackers. Unpublished Diploma Thesis at Fachhochschule Dortmund, Department of Computer Science, 2009

## Claims

1. Method for the determination and/or feedback and/or control of the effective measurement space in motion capturing systems, in which at least one person or object is performing movements under control of at least one sensor, **characterised in that**
in a first step a model of the size and/or the geometry of the valid measurement space of the motion capturing system is determined under the current environmental conditions,
where after the model of the determined valid measurement space and/or derived measurements, which are derived by comparing the model with the actual data of the movements of the person or object, are used as feedback for or to control either the environmental conditions and/or the motion capturing system and/or the moving person or object so that actions can be performed with which a malfunction of an application program is prevented in which the environmental data and the data of the movement of the person or object are processed.

2. Method according to claim 1, **characterised in that** in a first step a model of the size and/or the geometry of the valid measurement space of the motion capturing system is determined under the current environmental conditions, where after the model of the determined valid measurement space is
either fed into an application program in which the environmental data and the data of the movement of the person or object are processed, and which application program shows the determined valid measurement space to the person or object, or
shown directly to the moving person or object,
so that the moving person or object can take action to control its movements within the valid measurement space accordingly.

3. Method according to claim 1, **characterised in that** in a first step a model of the size and/or the geometry of the valid measurement space of the motion capturing system is determined under the current environmental conditions,
where after the model of the determined valid measurement space is permanently compared with the actual data of the movements of the person or object, so that actions can be performed with which a malfunction of an application program is prevented in which the environmental data and the data of the movement of the person or object are processed.

4. Method according to one of the claims 1 to 3, **characterised in that** the action consists in interrupting the data flow between the motion capturing system and the application program.

5. Method according to one of the claims 1 to 3, **characterised in that** the action consists in a feedback of derived information, especially distance data or error data, into the application program relating to the distance of the boundaries of the measurement space or the existence of an error status so that the application program can perform respective error processes.

6. Method according to one of the claims 1 to 3, **characterised in that** the action consists in a feedback of derived information, especially distance data or alert signals directly to the moving person or object, so that the moving person or object can control its movements within the valid measurement space accordingly.

7. Method according to one of the claims 1 to 3, **characterised in that** the action consists in a feedback of derived information, especially distance data or alert signals to the moving person or object in the form of a third person view, especially as a transparent geometry around an avatar of the moving person or object, so that the moving person or object can control its movements within the valid measurement space accordingly.

8. Method according to one of the claims 1 to 3, **characterised in that** the action consists in a direct control or adapting of parameters determining the function of the motion capturing system or of the environment itself.

9. Method according to claim 8, **characterised in that** the function of the motion capturing system can be influenced by carrying out movements of the motion capturing system to generate a spatial shift of the valid measurement space.

10. Method according to claim 8, **characterised in that** the function of the motion capturing system can be influenced by modifying or adapting technical parameters of the motion capturing system to recover adequate recording conditions, especially modifying the focal distance in camera based motion capturing systems.

11. Method according to one of the preceding claims, **characterised in that** the determining of the model of the valid measurement space is carried out once or in a continuous manner, preferably after changes in the recording conditions of the motion capturing system or changes of the environment.

12. Method according to one of the preceding claims, **characterised in that** the feedback of distance data or error data to the moving person or object is a feedback of visual data and/or of acoustic signals and/or of vibrating signals.

13. Method according to claim 12, **characterised in that** the feedback in the form of visual data is a transparent geometry around the moving person or object or his avatar.

14. Method according to claim 12, **characterised in that** the feedback in the form of an acoustic signal is an audio warning with increasing intensity or modulated pitch dependent on the approach to the boundaries of the valid measurement space.

15. Method according to claim 12, **characterised in that** the feedback in the form of a vibrating signal is an noticeable tactile warning with increasing intensity or modulated pitch dependent on the approach to the boundaries of the valid measurement space.

16. Device for the determination and/or feedback and/or control of the effective measurement space in motion capturing systems, in which at least one person or object is performing movements under control of at least one sensor, especially for carrying out the one of the methods according to one of the preceding claims,
**characterised in that**
the device contains a unit, that determines a model of the size and/or the geometry of the valid measurement space of the motion capturing system under the current environmental conditions,
wherein that unit is functionally connected either with the moving person or object or with the application program, in which the environmental data and the data of the movement of the person or object are processed, or with the environment itself in such a manner, that the information about the determined valid measurement space of the motion capturing system can be used to influence the movements of the person or object.

17. Device according to claim 16, **characterised in that** the unit is connected to the motion capturing system so that error conditions in the motion capturing system are recognised and can be used for determining a model of the size and dimension of the geometry of the valid measurement space of the motion capturing system.

18. Device according to one of the claims 16 or 17, **characterised in that** the unit transmits information to the moving person or object by means of a display, a head mounted display or a projection surface or the like, on which the boundaries of the effective measurement space of the motion capturing system are displayed.

19. Device according to one of the claims 16 to 18, **characterised in that** the unit transmits information to the moving person or object by means of an generator for acoustic signals or for vibrating signals.
